# EUROPÄISCHE PATENTSCHRIFT

(11) **EP 1 227 296 B1**
(45) Veröffentlichungstag und Bekanntmachung des Hinweises auf die Patenterteilung: **14.09.2005**
(21) Anmeldenummer: 02000746.4
(22) Anmeldetag: 12.01.2002
(51) Int. Cl.: G01B 7/06, G21C 17/017

(54) **Messsystem zur Ermittlung der Schichtdicke einer Oxidschicht ( shadow corrosion, lift off ) mit einem Führungsschlitten**
Measuring system for evaluating the thickness of an oxide layer ( shadow corrosion, lift off ) with a leading sledge
Système de mesure pour l'évaluation d'épaisseur d'une couche d'oxyde ( shadow corrosion, lift off ) avec un traineau guidé

(30) Priorität: 19.01.2001 DE 10102303
(43) Veröffentlichungstag der Anmeldung: 31.07.2002
(73) Patentinhaber: Framatome ANP GmbH, 91058 Erlangen (DE)
(72) Erfinder: Hummel, Wolfgang, Dipl.-Ing. (FH), 91085 Weisendorf (DE); Kraus, Kurt, Dipl.-Ing., 91315 Höchstadt (DE); Kurzer, Klaus, Dipl.-Ing., 91338 Igensdorf (Etl.) (DE); Sohler-Zinner, Rolf, Dipl.-Ing., 92318 Neumarkt/ Opf. (DE)
(74) Vertreter: Tergau & Pohl Patentanwälte

(56) Entgegenhaltungen:
- DE-A- 3 335 080
- DE-B- 1 046 896
- US-A- 4 722 142
- US-A- 5 142 990

## Beschreibung

Die Erfindung betrifft ein Meßsystem zur Ermittlung der Schichtdicke einer Oxidschicht auf einer metallischen Trägerschicht.

Bei metallischen, flächig ausgedehnten Gebilden kann je nach der sie umgebenden Atmosphäre eine Oxidation ihrer Oberfläche auftreten. Dabei bildet sich auf dem insofern als metallische Trägerschicht anzusehenden metallischen Gebilde eine üblicherweise nichtleitende Oxidschicht. Grundsätzlich sind derartige Oxidschichten nicht notwendigerweise störend für den weiteren Betrieb oder die weitere Verwendung des jeweiligen metallischen Gebildes; je nach der Schichtdicke der sich bildenden Oxidschicht können jedoch lokale Abnutzungen auftreten, die sich störend auf die Umgebung des jeweiligen metallischen Gebildes auswirken können.

Die Bildung derartiger Oxidschichten kann in einer Vielzahl von technischen Anlagen, wie beispielsweise an Rohrleitungen, bei der Ölförderung, an Pumpstationen usw. auftreten. Auch können sich bei in kerntechnischen Anlagen eingesetzten Brennelementkästen, insbesondere im Brennelementlagerbecken einer nuklearen Kraftwerksanlage, Oxidschichten auf den Oberflächen der metallischen Komponenten der Brennelementkästen bilden. Insbesondere kann dabei eine auch als "Shadow-Korrosion" bezeichnete Korrosion metallischer Komponenten auftreten, die zur Bildung derartiger Oxidschichten führen kann. Eine derartige Shadow-Korrosion bezeichnet eine lokal erhöhte Korrosion unter Bestrahlung an Komponenten aus Zr-Basis-Legierungen im Bereich einer Materialpaarung mit austenitischem Stahl oder einer Nickel-Basis-Legierung.
Derartige Korrosionserscheinungen an Brennelementkästen sind grundsätzlich nicht problematisch und schränken auch die weitere Verwendbarkeit des jeweiligen Brennelementkastens grundsätzlich nicht ein. Jedoch können auch bei derar tigen Brennelementkästen Abplatzungen der sich bildenden Oxidschichten gewisse Grenzen übersteigen. Derartige Abplatzungen könnten sich störend auf Nachbarsysteme im Reaktorkern auswirken und sind daher unerwünscht.

Um derartigen Abplatzungen, ggf. durch frühzeitigen Austausch einer von Oxidation betroffenen Komponente, rechtzeitig entgegen wirken zu können, können in mehr oder weniger regelmäßigen Abständen Kontrolluntersuchungen der Schichtdicken der sich bildenden Oxidschichten auf den betroffenen Komponenten vorgesehen sein. Dies ist besonders bei gut zugänglichen Komponenten und insbesondere an deren Außenseiten auch gut möglich. Ein hierzu geeignetes Meßsystem mit einem Führungsschlitten und einer daran angeordneten Meßsonde ist beispielsweise aus der US 51 24 641 bekannt.

Allerdings kann auch an unzugänglichen Stellen, wie beispielsweise an der Innenseite einer im wesentlichen geschlossenen Komponente wie beispielsweise einem langgestreckten Rohrstück, eine Kontrolluntersuchung wünschenswert sein. Gerade im Fall von Brennelementkästen in einer kerntechnischen Anlage ist dabei üblicherweise die punktuelle oder lokal ausgedehnte Ermittlung der Schichtdicke der Oxidschicht im Außenbereich des jeweiligen Brennelementkastens vorgesehen. Daraus wird dann in verallgemeinernder Art eine Aussage über den insgesamt vorliegenden Grad an Korrosion des jeweiligen Brennelementkastens getroffen. Aufgrund derartiger Verallgemeinerungen ist eine derartige Aussage jedoch nur bedingt genau, wobei insbesondere für den eigentlich nicht zugänglichen Innenbereich des jeweiligen Brennelementkastens nur vergleichsweise ungenaue Schätzwerte für die jeweiligen Schichtdicken der Oxidschicht angegeben werden können.

Der Erfindung liegt daher die Aufgabe zugrunde, ein Meßsystem zur Ermittlung der Schichtdicke einer Oxidschicht auf einer metallischen Trägerschicht anzugeben, mit dem auch für den Innenbereich von im wesentlichen umschlossenen Komponenten wie beispielsweise Rohrstücken oder Brennelementkästen die Schichtdicken der Oxidschichten mit hoher Zuverlässigkeit bei besonders geringem Aufwand ermittelbar sind.

Diese Aufgabe wird erfindungsgemäß nach dem Anspruch 1 gelöst.

Die Erfindung geht dabei von der Überlegung aus, daß die Bestimmung der Schichtdicke einer Oxidschicht unter Verwendung einer geeigneten Meßsonde dann zuverlässige möglich ist, wenn die Meßsonde hinsichtlich eines Bezugssystems vergleichsweise genau positioniert werden kann. Im Außenbereich metallischer Komponenten ist dies aufgrund der üblicherweise vorliegenden Zugänglichkeit vergleichsweise unproblematisch. Gerade im Innenbereich von an sich geschlossenen Komponenten wie beispielsweise Röhrenstücken oder Brennelementkästen ist jedoch die Positionierung der Meßsonde gerade wegen der Unzugänglichkeit des jeweiligen Raumbereichs besonderes problematisch. Um eine derartige definierte Positionierung der Meßsonde mit einfachen Mitteln zuverlässige sicherzustellen, ist die Meßsonde daher an einem Trägerelement oder einem Führungsschlitten angeordnet, der seinerseits eine Anzahl von mit ihm verbundenen Positionierungselementen aufweist. Diese sind dafür vorgesehen, in unmittelbarem mechanischem Kontakt mit der zu vermessenden Komponente geführt zu werden, so daß sie in ihrer Gesamtheit eine Bezugsebene für die Meßsonde und somit eine zuverlässige Aussage über deren Positionierung relativ zur zu vermessenden Komponente vorgeben. Um dabei ein Entlangführen der Meßsonde an der Oberfläche der zu vermessenden Komponente ohne deren Beschädigung zu ermöglichen und somit die Erstellung von Schichtdickenprofilen zu erlauben, sind die Positionierungselemente dabei an ihren jeweiligen freien Enden mit Laufrollen versehen, die auf der zu vermessenden Komponente abrollen können.

Um mit vergleichsweise einfachen Mitteln eine zuverlässige Bestimmung der Schichtdicke der Oxidschicht zu ermöglichen, umfaßt die Meßanordnung vorteilhafterweise eine mit einem Wirbelstrommeßgerät verbundene Spulenanordnung. Die Meßsonde, welche die Spulenanordnung enthält, ist dabei insbesondere zur Bestimmung der Dicke einer nicht elektrisch leitenden Schicht - nämlich vorliegend der Oxidschicht - nach dem sogenannten Lift-Off-Effekt" ausgelegt. Bei der Ausnutzung dieses Effekts wird die Impedanzänderung einer hochfrequent betriebenen Spule bei Abstandsänderung zu einem elektrischen leitenden Meßobjekt genutzt. Als elektrisch leitendes Meßobjekt dient dabei die metallische Trägerschicht, deren Abstand zur Spule einerseits durch den Abstand der Spule zur Frontseite der Meßsonde und andererseits durch die zu bestimmende Schichtdikke der Oxidschicht gegeben ist. Durch die hochfrequent betriebene Spule wird dabei ein Wirbelstrom in der als elektrisch leitendes Meßobjekt dienenden Trägerschicht erzeugt, der seinerseits wiederum in Abhängigkeit vom Abstand eine Rückwirkung auf die Impedanz der Spule hervorruft.

Um die Ermittlung von Profilen der Schichtdicke der Oxidschicht zu ermöglichen, ist der Führungsschlitten des Meßsystems vorteilhafterweise in einer im wesentlichen parallel zur Bezugsebene geführten Längsrichtung verfahrbar. Die Meßsonde ist dabei mit ihrem Meßkopf auf die Bezugsebene hin und somit im wesentlichen senkrecht zur Längsrichtung ausgerichtet.

In besonders vorteilhafter Ausgestaltung ist das Meßsystem dabei für eine flächige Abtastung der zu untersuchenden Komponente oder Wand ausgebildet. Dazu ist die Meßsonde in zwei Raumdimensionen unabhängig voneinander verfahrbar ausgebildet. Die Verfahrbarkeit in der ersten Raumdimension ist dabei durch die Verfahrbarkeit des Führungsschlittens in der genannten Längsrichtung gewährleistet. Um zusätzlich die Verfahrbarkeit in einer davon unabhängigen zweiten Raumrichtung zu ermöglichen, ist die Meßsonde in weiterer vorteilhafter Ausgestaltung über einen Querschlitten am Führungsschlitten angebracht, wobei der Querschlitten in einer im wesentlichen parallel zur Bezugsebene geführten, um einen Winkel, vorzugsweise um 90° Grad, relativ zur Längsrichtung gedrehten Querrichtung relativ zum Führungsschlitten verfahrbar ist.

In besonders vorteilhafter Ausgestaltung ist die Meßsonde bezüglich des Führungsschlittens federnd gelagert. Die Meßsonde kann dabei insbesondere am Querschlitten federnd aufgehängt sein. Durch die federnde Lagerung der Meßsonde ist einerseits gewährleistet, daß der Meßkopf der Meßsonde grundsätzlich in der durch die Positionierungselemente vorgegebenen Bezugsebene gehalten ist. Bei einem Anliegen der Laufrollen der Positionierungselemente an der zu untersuchenden Wand oder Oberfläche ist somit der Meßkopf mit einer vorgebbaren Anpreßkraft an die Wand bzw. Oberfläche angedrückt und gleitet bei einem Verfahren des Führungsschlittens oder des Querschlittens auf dieser. Zudem ermöglicht die federnde Aufhängung der Meßsonde aber auch eine Absicherung der Meßsonde in dem Sinne, daß diese bei auftretenden Unebenheiten oder Anlagerungen an der zu untersuchenden Wand von der Bezugsebene aus gesehen nach hinten zurückweichen kann und somit bei einem Überfahren der jeweiligen Unebenheit nicht zerstört wird. Gerade bei der Verwendung des Meßsystems zur Untersuchung der Innenoberfläche von Brennelementkästen muß mit sogenanntem strahleninduziertem Wachstum gerechnet werden, bei dem infolge radioaktiver Bestrahlung das Material einer Versprödung sowie einer Aufweitung seiner Gitterkonstanten ausgesetzt sein kann.

Darum ist für einen Einsatz im Innenraum einer im wesentlichen umschlossenen Komponente wie beispielsweise einem Rohrstück oder einem Brennelementkasten das Meßsystem vorteilhafterweise zur Sicherstellung eines selbsttätigen Andrucks der Positionierungselemente und der von diesen flankierten Meßsonde an die zu untersuchende Wand ausgestattet. Dazu sind am Führungsschlitten zweckmäßigerweise eine Anzahl von federnd gelagerten Andruckarmen angeordnet, von denen jeder an seinem freien Ende jeweils eine Laufrolle aufweist. Die Andruckarme ermöglichen dabei ein Abstützen des Führungsschlittens an der der zu untersuchenden Wand gegenüberliegenden Wand. Über die federnde Lagerung der Andruckarme ist dabei ein vorgebbarer Anpreßdruck der Positionierungselemente an die zu untersuchende Wand gewährleistet, so daß sich diese und mit ihnen auch die Meßsonde immer in einer definierten Position im Hinblick auf die zu untersuchende Wand befinden. Jeder Andruckarm befindet sich dabei über seine Laufrolle in mechanischem Kontakt mit der entsprechenden Wand, wobei bei einer Verschiebung des Führungsschlittens in Längsrichtung die Laufrollen an der entsprechenden Wand abrollen.

Zur zuverlässigen Erstellung eines Schichtdickenprofils ist das Meßsystem zweckmäßigerweise derart ausgebildet, daß der Führungsschlitten in Seiten- oder Querrichtung stabilisiert geführt ist. Dies ist gerade bei der Untersuchung der Innenoberfläche eine im wesentlichen geschlossenen Komponente wie einem Rohrstück oder einem Brennelementkasten vorteilhafterweise dadurch gewährleistet, daß am Führungsschlitten in im Hinblick auf die Meßsonde seitlicher Richtung eine Anzahl von Stützarmen angeordnet ist, von denen jeder an seinem freien Ende jeweils eine Laufrolle aufweist. Eine derartige Anordnung eignet sich besonders für ein Meßsystem zur Untersuchung des Innenraums einer im wesentlichen geschlossenen Komponente mit rechteckigem Querschnitt, wie dies beispielsweise bei einem Brennelementkasten der Fall ist. Dabei kann die Meßsonde innenseitig gemeinsam mit den sie umgebenden Positionierungselementen einer Vorderseite des Brennelementkastens zugewandt sein, wobei der Führungsschlitten an der Rückseite über die Andruckarme abgestützt ist. Rechts- und linksseitig kann dann eine Abstützung des Führungsschlittens über die Stützarme erfolgen, so daß eine automatische Zentrierung des Führungsschlittens gewährleistet ist. Die an den Stützarmen angeordneten Laufrollen ermöglichen dabei wiederum die freie Bewegbarkeit des Führungsschlittens in Längsrichtung.

Für eine besonders günstige selbsttätige Zentrierung des Führungsschlittens in Querrichtung zur Meßsonde sind dabei jeweils zwei in seitlicher Richtung gegenüberliegende Stützarme an einem Haltepunkt gemeinsam angelenkt. Die Laufrollen dieser gemeinsam angelenkten Stützarme wirken somit in dem Sinne parallel, daß sie paarweise und nach jeder Seite synchron arbeiten. Die Meßsonde wird somit auch bei möglicherweise in Längsrichtung auftretenden Aufweitungen des Innenquerschnitts der zu untersuchenden Komponente immer auf gleicher Längsachse geführt.

Der Führungsschlitten des Meßsystems ist vorteilhafterweise über eine Trägerstange an einem Trägerkasten aufgehängt. Der Trägerkasten ist dabei zweckmäßigerweise derart dimensioniert, daß der in Längsrichtung verfahrbare Führungsschlitten im Innenraum des Trägerkastens transportiert werden kann. Zur Messung kann der Trägerkasten auf die zu prüfende Struktur oder Komponente aufgesetzt werden. Dabei ist der Trägerkasten zweckmäßigerweise in seinen Abmessungen an die zu prüfende Struktur oder Komponente derart angepaßt, daß ein glatter Übergang beim Einfahren des Führungsschlittens in den Innenraum der zu prüfenden Komponente vorliegt.

In den Trägerkasten ist vorteilhafterweise ein Kalibrierelement für die Meßsonde integriert. Dieses umfaßt eine Anzahl von Oxidschichten bekannter Dicke auf einer metallischen Trägerschicht. Beim Überstreichen jeder dieser Oxidschichten generiert die Meßsonde jeweils eine Ausgangssignal, für das somit die zugrundeliegende Schichtdicke der Oxidschicht bekannt ist. Anhand verschiedener bekannter Schichtdicken kann somit unmittelbar vor einer tatsächlich durchzuführenden Messung in der Art einer Eichkurve ein Datensatz erzeugt werden, in dem für eine Anzahl von Schichtdicken das jeweils entsprechende Ausgangssignal der Meßsonde hinterlegt ist. Infolgedessen kann jeder Ausgangsspannung bei der nachfolgenden tatsächlichen Messung eine Schichtdicke der Oxidschicht, beispielsweise durch Interpolation, zugeordnet werden.

Die mit der Erfindung erzielten Vorteile bestehen insbesondere darin, daß durch die am Führungsschlitten angeordneten Positionierungselemente eine definierte Bezugsebene für die Meßsonde vorgegeben ist. Bei an der zu untersuchenden Wand oder an dem zu untersuchenden, flächig ausgedehnten Gebilde anliegenden Positionierungselementen ist somit auf besonders einfache und zuverlässige Weise sichergestellt, daß die Meßsonde eine genau definierte Position im Hinblick auf die zu untersuchende Wand einnimmt. Gerade durch die Abstützung des Führungsschlittens an weiteren Innenwänden der zu untersuchenden Komponente ist zudem selbsttätig und ohne besonderen Justieraufwand sichergestellt, daß die definierte Position der Meßsonde bezüglich der zu untersuchenden Wand erhalten bleibt. Durch die endseitige Ausstattung aller entsprechenden Komponenten mit Laufrollen ist zudem die freie Verschiebbarkeit bei gleichzeitig stabiler Positionierung der Meßsonde im Hinblick auf ihren Abstand zur zu untersuchenden Wand sichergestellt. In Verbindung mit einem zusätzlich vorgesehenen Querschlitten zur Erschließung einer zweiten Raumrichtung ist somit auf besonders einfache Weise ein flächiges Abtasten der Innenoberfläche der zu untersuchenden Komponente ermöglicht.

Ein Ausführungsbeispiel der Erfindung wird anhand einer Zeichnung näher erläutert. Darin zeigen:
- Figur 1: ein Meßsystem in Längsrichtung,
- Figur 2: das Meßsystem gemäß Figur 1 in einem Längsschnitt mit im Vergleich zu Figur 1 um 90° Grad gedrehter Blickrichtung und,
- Figur 3: einen Ausschnitt aus Figur 2.

Gleiche Teile sind in allen Figuren mit denselben Bezugszeichen versehen.

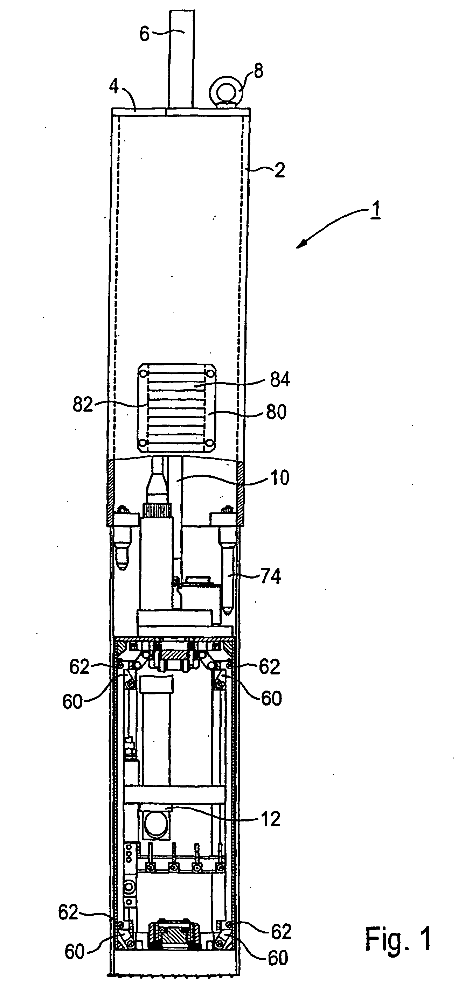

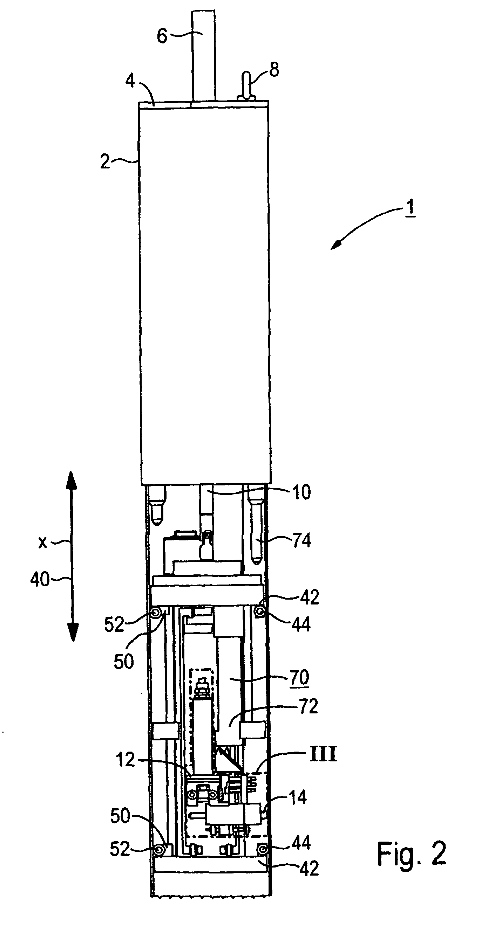

Das Meßsystem 1 gemäß den Figuren 1 und 2 ist zur Ermittlung der Schichtdicke einer Oxidschicht auf einer metallischen Trägerschicht vorgesehen. Das Meßsystem 1 ist dabei im Ausführungsbeispiel für den Einsatz im Innenbereich eines Brennelementkastens in einer kerntechnischen Anlage ausgebildet. Alternativ kann das Meßsystem 1 jedoch auch zum Einsatz für andere zu untersuchende Komponenten ausgebildet sein, wobei sich insbesondere hinsichtlich der Dimensionierung und/oder der Auslegung des Querschnitts Anpassungen ergeben können.

Das Meßsystem 1 umfaßt einen Trägerkasten 2, der auch als Transportbehälter für das gesamte Meßsystem 1 einsetzbar ist. Der Trägerkasten 2 weist zur automatisierten Handhabung des Meßsystems 1 an seinem Kastendeckel 4 ein Stangenwerkzeug 6 sowie einen Befestigungsring 8 auf. Über das Stangenwerkzeug 6 und den Befestigungsring 8 ist das Meßsystem 1 mittels der in einem Kernkraftwerk üblicherweise vorhandenen Manipulationseinrichtungen wie beispielsweise Kränen transportier- und justierbar.

Am Trägerkasten 2 ist über eine Trägerstange 10 ein Führungsschlitten 12 aufgehängt. Am Führungsschlitten 12 ist eine Meßsonde 14 angeordnet, die für die eigentliche Ermittlung der Schichtdicke der Oxidschicht ausgelegt ist.

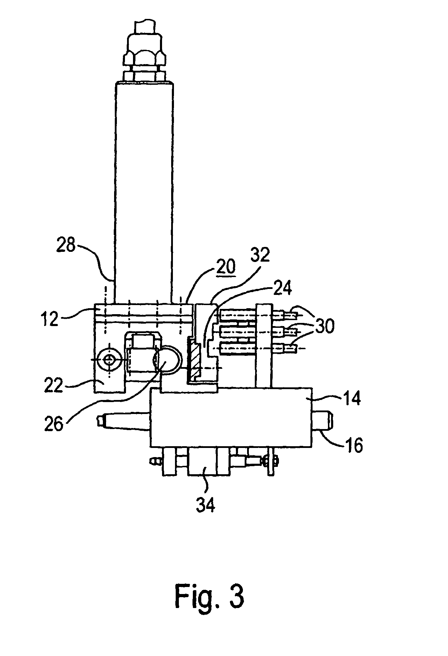

Die Meßsonde 14, die in Figur 3 in vergrößertem Ausschnitt dargestellt ist, ist dabei zur Bestimmung der Schichtdicke einer Oxidschicht auf der Grundlage des sogenannten "Lift-Off-Effekts" ausgebildet. Dazu weist die Meßsonde 14 in einem Meßkopf 16 unmittelbar hinter dessen Frontseite eine Spule auf, deren Spulenachse im wesentlichen senkrecht zum beabsichtigten Meßobjekt steht. Die Spule ist dabei eingangsseitig an eine Wheatstone'sche Brückenschaltung und ausgangsseitig mittels eines Übertragers an ein Wirbelstrommeßgerät angeschlossen. Zur Ermittlung der Schichtdicke einer Oxidschicht wird der Meßkopf 16 der Meßsonde 14 in eine definierte Position möglichst nah an der Oberfläche der zu vermessenden Oxidschicht oder sogar auf diese aufsetzend gebracht. Bei der Messung wird die Spule mit einem hochfrequenten Eingangssignal bespeist. Durch das durch die solchermaßen betriebene Spule generierte Magnetfeld wird in der die Oxidschicht tragenden metallischen Trägerschicht ein Wirbelstrom erzeugt, der seinerseits eine Rückwirkung auf die Impedanz der Spule hervorruft. Der Größe dieser Rückwirkung ist dabei abhängig vom Abstand der metallischen Trägerschicht von der spule. Dieser Abstand ist seinerseits gegeben durch den Abstand der Spule von der Frontseite des Meßkopfs 16 und - bei auf der Oxidschicht aufliegendem Meßkopf 16 - durch die Dicke der Oxidschicht. Die für den Betrieb der Spule eingesetzte Brückenschaltung liefert somit ein Ausgangssignal, das seinerseits für die Schichtdicke der Oxidschicht charakteristisch ist und somit für diese auswertbar ist.

Die Meßsonde 14 ist am Führungsschlitten 12 über ein Querverfahrsystem 20 befestigt, wie es ebenfalls in Figur 3 dargestellt ist. Das Querverfahrsystem 20 umfaßt dabei einen Querschlitten 22, an dem die Meßsonde 14 über ein Halteelement 24 federn gelagert ist. Der Querschlitten 22 ist dabei auf Führungsschienen 26 geführt und in einer Querrichtung verfahrbar. Dazu ist dem Querschlitten 22 ein Antriebsmotor 28 zugeordnet, über den der Querschlitten 22 entlang der Führungsschienen 26 bewegbar ist. Als Positionierungshilfe in Querrichtung ist dem Querschlitten 22 eine Anzahl von berührungslosen Endschaltern 30 zugeordnet, die mittels Schaltnocken in einem Nockenträger 32 betätigbar sind. Der Nockenträger 32 ist dabei mit den feststehenden Führungsschienen 26 verbunden. Über die im Nockenträger 32 vorgesehenen Schaltnocken sind in Querrichtung eine Mittellage und zwei einstellbare Anfahrpositionen rechts bzw. links der Mitte sowie die Entlagenstellungen für den Querschlitten 22 einstellbar. Der Antriebsmotor 28 ist zudem mit einem integrierten Inkrementalgeber versehen, über den ausgehend von einer vorgebbaren Mittenposition gezielte Positionen in Querrichtung angefahren werden können.

Der Meßsonde 14 ist zudem zur bedarfsweisen Deaktivierung ein Pneumatikzylinder 34 zugeordnet, über den die Meßsonde 14 im Bedarfsfall in eine Richtung weg von der zu vermessenden Kontur bewegt werden kann.

Über das Querverfahrsystem 20 ist die Meßsonde 14 am Führungsschlitten 12 befestigt. Mit anderen Worten: die Meßsonde 14 ist über den Querschlitten 22 am Führungsschlitten 12 angebracht. Der Führungsschlitten 12 ist dabei in einer in Figur 2 durch den Doppelpfeil 40 angedeuteten Längsrichtung x verfahrbar. Dies ist im Ausführungsbeispiel durch eine verfahrbare Ausgestaltung der Trägerstange 10 erreicht. Über den in Längsrichtung x verfahrbaren Führungsschlitten 12 und den in Querrichtung dazu verfahrbaren Querschlitten 22 ist die Meßsonde 14 somit in zwei unabhängigen Raumrichtungen verfahrbar. Somit ist die Meßsonde 14 im Meßsystem 1 für eine flächige Abtastung einer zu untersuchenden Komponente ausgestaltet.

Um dabei auch eine Vermessung von Oberflächen in nicht ohne weiteres zugänglichen Innenräumen von im wesentlichen geschlossenen Komponenten zu ermöglichen, ist das Meßsystem 1 derart ausgelegt, daß die Meßsonde 14 während eines Meßvorgangs weitgehend selbsttätig einen definierten Abstand zur zu vermessenden Oberfläche einhält. Dazu sind am Führungsschlitten 12, wie dies in Figur 2 erkennbar ist, oberhalb und unterhalb der Meßsonde 14 Positionierungselemente 42 angeordnet. Die Positionierungselemente 42 sind dabei starr mit dem Führungsschlitten 12 verbunden und geben in ihrer Gesamtheit eine Bezugsebene für die Meßsonde 14 vor. An seinem freien Ende weist jedes Positionierungselement 42 jeweils eine Laufrolle 44 auf, die bei einem Verfahren des Führungsschlittens 12 in Längsrichtung x auf der zu vermessenden Oberfläche abrollt. Die Laufrollen 44 werden dabei während einer Messung in dauerndem Kontakt mit der zu vermessenden Oberfläche gehalten, so daß eine definierte Positionierung der Meßsonde 14 über die Positionierungselemente 42 gewährleistet ist. Hinsichtlich der Abmessungen ist die Meßsonde 14 dabei derart gewählt, daß sich der Meßkopf 16 der Meßsonde 14 in Folge der Dimensionierung der Positionierungselemente 42 in gleitendem Kontakt zur zu vermessenden Oberfläche befindet.

An seiner dem Meßkopf 16 der Meßsonde 14 gegenüberliegenden Seite weist der Führungsschlitten 12 eine Anzahl von federnd gelagerten Andruckarmen 50 auf. Jeder Andruckarm 50 ist dabei an seinem freien Ende jeweils mit einer Laufrolle 52 versehen. Über die Andruckarme 50 und die an diesen angeordneten Laufrollen 52 ist der Führungsschlitten 12 an der der zu vermessenden Wand gegenüberliegenden Wand einer im wesentlichen geschlossenen Komponente abstützbar. Die federnde Lagerung der Andruckarme 50 bewirkt dabei, daß auch bei sich geringfügig änderndem Abstand zwischen der zu vermessenden Wand und der ihr gegenüberliegenden Wand die Positionierungselemente 42 und mit diesen die Meßsonde 14 zuverlässige an die zu vermessende Wand angedrückt werden.

Zur Stabilisierung der Lage des Führungsschlittens 12 in Querrichtung sind am Führungsschlitten 12, wie dies aus Figur 1 entnehmbar ist, in im Hinblick auf die Meßsonde 14 seitlicher Richtung eine Anzahl von Stützarmen 60 angeordnet. Dabei sind in scheren- oder parallelogrammartiger Anordnung jeweils zwei in seitlicher Richtung gegenüberliegende Stützarme 60 an einem Haltepunkt gemeinsam angelenkt. Jeder Stützarm 60 ist dabei an seinem freien Ende mit einer Laufrolle 62 versehen. Durch die gemeinsame Anlenkung der gegenüberliegenden Stützarme 60 wirken deren Laufrollen 62 dabei in dem Sinne parallel, daß sie paarweise und nach jeder Seite synchron arbeiten. Somit ist der Führungsschlitten 12 und mit diesem die Meßsonde 14 in Querrichtung trotz möglicher Aufweitungen des Querschnitts des zu vermessenden Objekts immer auf gleicher Längsachse geführt.

Für eine Überwachung oder Steuerung eines Meßvorgangs ist am Führungsschlitten 12 zudem ein optisches Kontrollsystem 70 angeordnet. Dieses umfaßt eine Beobachtungskamera 72 mit Umlenkspiegel sowie einen nicht näher dargestellten Scheinwerfer. Zur Führung des Führungsschlittens 12 bei einer Bewegung in Längsrichtung x ist ein Zentrierbolzen 74 vorgesehen, der in eine geeignete Ausnehmung im oberen Bereich des Führungsschlittens 12 eingreift.

Das Meßsystem 1 ist ferner mit einem Kalibrierelement 80 für die Meßsonde 14 versehen. Das Kalibrierelement 80 ist dabei in den Trägerkasten 2 integriert und umfaßt eine metallische Trägerschicht 82, auf der eine Anzahl von Oxidschichten 84 von jeweils bekannter Dicke aufgebracht sind. Das Kalibrierelement 80 ist dabei derart in den Trägerkasten 2 integriert, daß es beim Herausfahren des Führungsschlittens 12 aus dem Innenbereich des Trägerkastens 2 heraus von der Meßsonde 14 überstrichen wird. Dabei kann somit überwacht werden, welches Ausgangssignal die Meßsonde 14 beim Überstreichen der Oxidschichten 84 jeweils generiert. Somit ist in eindeutiger Weise eine Zuordnung eines gelieferten Ausgangssignals zu einer bekannten Schichtdicke einer Oxidschicht 84 möglich. Die daraus gewonnenen Daten können in der Art einer Eichkurve oder Eichkennlinie in einer Auswerteeinheit hinterlegt werden und stehen sodann für die eigentliche Messung zur Verfügung. Dabei kann einem bei der eigentlichen Messung gewonnenen Ausgangssignal der Meßsonde 14 durch Vergleich mit dem Eichdatensatz oder durch Interpolation ein Meßwert für die Schichtdicke einer Oxidschicht zugeordnet werden.

## Patentansprüche

1. Meßsystem (1) zur Ermittlung der Schichtdicke einer Oxidschicht (84) auf einer metallischen Trägerschicht mit einem Führungsschlitten (12), mit dem eine Anzahl von Positionierungselementen (42) starr verbunden sind, die in ihrer Gesamtheit eine Bezugsebene für eine am Führungsschlitten (12) angeordnete Meßsonde (14) vorgeben, und von denen jedes an seinem freien Ende jeweils eine Laufrolle (52) aufweist.

2. Meßsystem (1) nach Anspruch 1, dessen Meßsonde (14) eine mit einem Wirbelstromdetektor verbundene Spulenanordnung umfaßt.

3. Meßsystem (1) nach Anspruch 1 oder 2, dessen Führungsschlitten (12) in einer im wesentlichen parallel zur Bezugsebene geführten Längsrichtung verfahrbar ist.

4. Meßsystem (1) nach Anspruch 3, dessen Meßsonde (14) über einen Querschlitten (22) am Führungsschlitten (12) angebracht ist, wobei der Querschlitten (22) in einer im wesentlichen parallel zur Bezugsebene geführten, um einen Winkel, vorzugsweise um 90°, relativ zur Längsrichtung gedrehten Querrichtung relativ zum Führungsschlitten (12) verfahrbar ist.

5. Meßsystem (1) nach einem der Ansprüche 1 bis 4, bei dem die Meßsonde (14) bezüglich des Führungsschlittens (12) federnd gelagert ist.

6. Meßsystem (1) nach einem der Ansprüche 1 bis 5, an dessen Führungsschlitten (12) eine Anzahl von federnd gelagerten Andruckarmen (50) angeordnet sind, von denen jeder an seinem freien Ende jeweils eine Laufrolle (52) aufweist.

7. Meßsystem (1) nach einem der Ansprüche 1 bis 6, an dessen Führungsschlitten (12) in im Hinblick auf die Meßsonde (14) seitlicher Richtung eine Anzahl von Stützarmen (60) angeordnet sind, von denen jeder an seinem freien Ende jeweils eine Laufrolle (52, 62) aufweist.

8. Meßsystem (1) nach Anspruch 7, bei dem jeweils zwei in seitlicher Richtung gegenüberliegende Stützarme (62) an einem Haltepunkt gemeinsam angelenkt sind.

9. Meßsystem (1) nach einem der Ansprüche 1 bis 8, bei dem der Führungsschlitten (12) über eine Trägerstange (10) an einem Trägerkasten (2) aufgehängt ist.

10. Meßsystem (1) nach Anspruch 9, in dessen Trägerkasten (2) ein Kalibrierelement (80) für die Meßsonde (5) integriert ist.

## Claims

1. Measuring system (1) for determining the layer thickness of an oxide layer (84) on a metallic carrier layer, having a guide carriage (12), to which a number of positioning elements (42) are rigidly connected, the combination of which positioning elements predetermines a reference plane for a measurement sensor (14) arranged on the guide carriage (12), and each of which positioning elements has a running roller (52) at its free end.

2. Measuring system (1) according to Claim 1, the measurement sensor (14) of which comprises a coil arrangement connected to an eddy current detector.

3. Measuring system (1) according to Claim 1 or 2, the guide carriage (12) of which is displaceable in a longitudinal direction running substantially parallel to the reference plane.

4. Measuring system (1) according to Claim 3, the measurement sensor (14) of which is positioned on the guide carriage (12) via a transverse carriage (22), the transverse carriage (22) being displaceable relative to the guide carriage.(12) in a transverse direction which runs substantially parallel to the reference plane and is rotated through an angle, preferably 90°, relative to the longitudinal direction.

5. Measuring system (1) according to one of Claims 1 to 4, in which the measurement sensor (14) is mounted resiliently with respect to the guide carriage (12).

6. Measuring system (1) according to one of Claims 1 to 5, with a number of resiliently mounted pressure-exerting arms (50), each of which has a running roller (52) at its free end, arranged on its guide carriage (12).

7. Measuring system (1) according to one of Claims 1 to 6, with a number of supporting arms (60), each of which has a running roller (52, 62) at its free end, arranged on its guide carriage (12), in a direction which is lateral with respect to the measurement sensor (14).

8. Measuring system (1) according to Claim 7, in which in each case two laterally opposite supporting arms (62) are jointly mounted at a holding point.

9. Measuring system (1) according to one of Claims 1 to 8, in which the guide carriage (12) is suspended from a carrier box (2) via a carrier rod (10).

10. Measuring system (1) according to Claim 9, which has a calibration element (80) for the measurement sensor (5) integrated in its carrier box (2).

## Revendications

1. Système (1) de mesure pour déterminer l'épaisseur d'une couche (84) d'oxyde sur une couche support métallique, comprenant un chariot (12) de guidage auquel sont reliés rigidement un certain nombre d'éléments (42) de positionnement qui, dans leur ensemble, prescrivent un plan de référence pour une sonde (14) de mesure montée sur le chariot (12) de guidage et dont chacun desquels a un galet (52) de roulement à son extrémité libre.

2. Système (1) de mesure suivant la revendication 1, dont la sonde (14) de mesure comprend un dispositif à bobine relié à un détecteur de courant de Foucault.

3. Système (1) de mesure suivant la revendication 1 ou 2, dont le chariot (12) de guidage peut être déplacé dans une direction longitudinale s'étendant sensiblement parallèlement au plan de référence.

4. Système (1) de mesure suivant la revendication 3, dont la sonde (14) de mesure est montée sur le chariot (12) de guidage par l'intermédiaire d'un chariot (22) transversal, le chariot (22) transversal pouvant être déplacé par rapport au chariot (12) de guidage dans une direction transversale sensiblement parallèlement au plan de référence tournée d'un certain angle, de préférence de 90°, par rapport à la direction longitudinale.

5. Système (1) de mesure suivant l'une des revendications 1 à 4, dans lequel la sonde (14) de mesure est montée élastiquement par rapport au chariot (12) de guidage.

6. Système (1) de mesure suivant l'une des revendications 1 à 5, sur le chariot (12) de guidage duquel sont montés un certain nombre de bras (50) d'application d'une pression montés élastiquement, dont chacun a respectivement un galet (52) de roulement à son extrémité libre.

7. Système (1) de mesure suivant l'une des revendications 1 à 6, sur le chariot (12) de guidage duquel sont disposés, dans une direction latérale par rapport à la sonde (14) de mesure, un certain nombre de bras (60) d'appui dont chacun a un galet (52, 62) de roulement à son extrémité libre.

8. Système (1) de mesure suivant la revendication 7, dans lequel respectivement deux bras (62) d'appui opposés en direction latérale sont articulés conjointement sur un point de maintien.

9. Système (1) de mesure suivant l'une des revendications 1 à 8, dans lequel le chariot (12) de guidage est suspendu par une tringle (10) porteuse à un caisson (2) porteur.

10. Système (1) de mesure suivant la revendication 9, dans le caisson (2) porteur duquel est intégré un élément (80) d'étalonnage de la sonde (5) de mesure.
